# EUROPEAN PATENT SPECIFICATION

(11) **EP 1 333 627 B1**
(45) Date of publication and mention of the grant of the patent: **26.05.2004**
(21) Application number: 02360047.1
(22) Date of filing: 30.01.2002
(51) Int. Cl.: H04L 12/56, H04Q 7/38

(54) **Method for establishing a connection between terminals having a short-range wireless communication interface**
Verfahren zur Herstellung einer Verbindung zwischen Endgeräten, die eine drahtlose Kommunikationsschnitstelle für kurze Reichweiten enthalten
Procédé d'établissement de liaison entre des terminaux dotés d'une interface de communication sans fil à courte portée

(43) Date of publication of application: 06.08.2003
(73) Proprietor: ALCATEL, 75008 Paris (FR)
(72) Inventor: Kumar, Vinod, 75005 Paris (FR); Coupechoux, Marceau, 75005 Paris (FR); Maillard, Herve, 92370 Chaville (FR)
(74) Representative: Urlichs, Stefan, Dipl.-Phys.

(56) References cited:
- GB-A- 2 358 765
- US-A- 5 086 394
- US-A1- 2001 055 976

## Description

### BACKGROUND OF THE INVENTION

The present invention relates to wireless communication and more precisely to a method for establishing a connection between terminals having a short-range wireless communication interface and an interface to a cellular radio communication network.

Direct high-speed short-range wireless communication is usually supported between terminals equipped with an appropriate interface having subscribed to this kind of service. A dedicated network infrastructure for example, an access point of IEEE 802.11 or of Hyperlan 2 is required to control the communication set up as well as the user profiles. Such a network infrastructure is limited to a small number of terminals due to the local characteristics of the communication. It may be, to some extend, compared to private branch exchange services which are reserved to terminals connected to this private branch exchange.

This solution presents the drawback of limiting the communication possibility between terminals supporting high-speed short-range communication in term of hardware but logically not registered under the same service provider. This is especially a drawback in case of mobile terminals equipped with a short-range interface since they cannot make the best of their mobility in that it is unlikely that a mobile user travelling away from its usual place of residence will meet another mobile user with a short-range interface having subscribed to the same service provider.

Document US-A-5086394 discloses a method, as well as the corresponding terminal and base station of a cellular communications network, for establishing a connection between terminals. The terminals are identified with a paging address.

Localisation information of the terminal's user is stored into the system, permitting the system to send a message to a pair of terminals identified to be in potential communication range, the terminals being able to establish a direct communication outside of the cellular network.

Document GB-A-2358765 discloses terminal with an Hiperlan 2 short-range wireless communication interface together with an interface for communicating with an UMTS cellular radio communication network.

Document US2001/0055976 A1 discloses a terminal with both a short-range wireless interface and a cellular interface, as well as a base station comprising registering means.

A particular object of the present invention is to provide an method for enabling a connection between terminals having a short-range wireless communication interface without relying on any dedicated network infrastructure.

Another object of the invention is to provide a terminal having a short-range wireless communication interface and interface to a cellular radio communication network as well as base station of a cellular radio communication network able to cooperate to perform a such method.

### SUMMARY OF THE INVENTION

These objects, and others that appear below, are achieved by a method for establishing a connection between terminals having a short-range wireless communication interface and an interface for communicating with a cellular radio communication network according to claim 1, a terminal according to claim 4 and a base station of a cellular radio communication network according to claim 6.

According to the present invention, a terminal identifier univocally identifying a terminal in the cellular radio communication network is stored in a database of an entity of the cellular radio communication network together with an information on the localization of the terminal as well as with an identifier of the short-range wireless interface univocally identifying the terminal among all devices supporting a similar short-range wireless interface. Then, the entity of the cellular radio communication network is able to perform database checks to detect by means of localization information if two terminals registered in the database are close enough for being able to set up a direct short-range communication. If it is the case, the entity triggers the transmission of a message to the two potential communication partners containing the identifier of the counterpart's short-range wireless communication interface.

The method according to the present invention presents the advantage to allow interaction at high bit rate between terminals equipped with a high-speed short-range wireless communication interface with a low transmission power.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows a system supporting the method according to the present invention;
- Figure 2 shows an embodiment of the method as implemented at a base station (fig 2a) and as implemented at a terminal (fig 2b);
- Figure 3 illustrates an embodiment of a terminal according to the present invention;
- Figure 4 represents an embodiment of a base station according to the present invention.

### DETAILED DESCRIPTION OF THE INVENTION

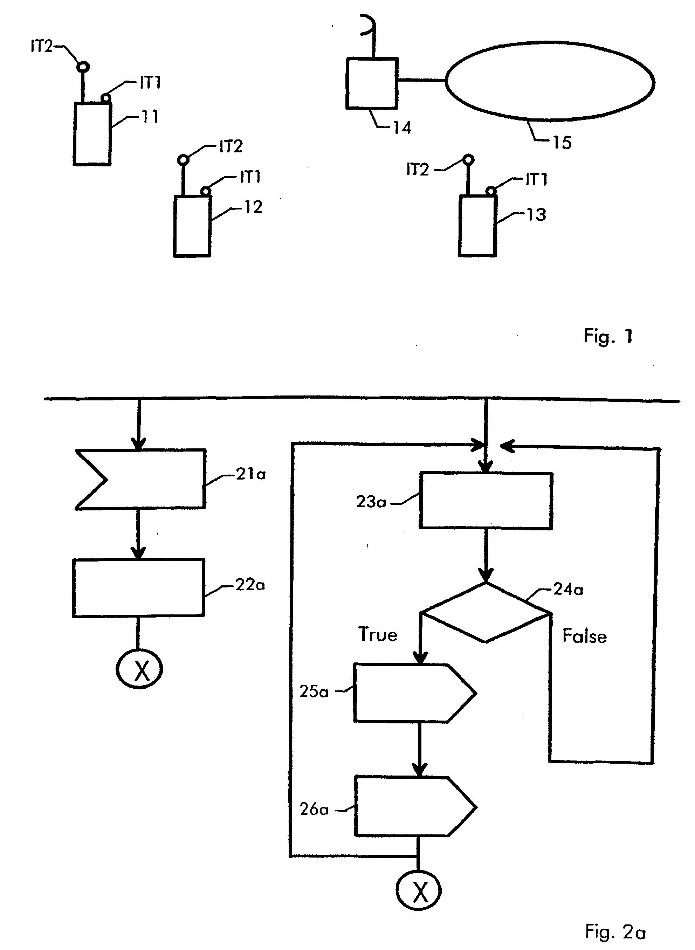

Figure 1 shows a system supporting the method according to the present invention. The simplified system presented on figure 1 comprises three terminals 11, 12, 13 equipped with a short-range wireless interface IT1 and an interface IT2 to communicate with a cellular radio communication network 15 over a base station 14.

Cellular radio communication network 15 is preferably a GSM, EDGE/GPRS or UMTS radio communication network.

Short-range wireless interface IT1 enables terminals 11, 12, 13 to communicate directly with each other if the distance between them is smaller than the range of the signal emitted at short-range interface IT1. Short-range wireless interface IT1 can be based on Bluetooth technology. In a preferred embodiment of the invention, short-range wireless interface IT1 enables high-speed communication based on IEEE 802.11 or Hyperlan 2 specification. Terminal 11, 12, 13 may be a cellular phone equipped with an additional Bluetooth interface or a lap top with cellular access and wireless LAN access.

Each terminal 11, 12, 13 comprises an first identifier for its short-range wireless interface IT1. This identifier is unique and has preferably a predefined format as defined in IEEE 802.11 specification.

Moreover, each terminal 11, 12, 13 has a second identifier for identifying itself in cellular radio communication network (e.g. MSISDN or TMSI).

According to the present invention, base station 14 can evaluate localization information for terminals 11, 12, 13.

On the one hand, localization information may be provided by the terminals 11, 12, 13 themselves to basis station 14, each terminal comprising a module for evaluating its localization. This may be the case if terminals 11, 12, 13 comprise a GPS module.

On the other hand, localization of terminals 11, 12, 13 may be determined by using well-known triangulation methods (e.g. TOA (time of arrival) for this purpose at least three fixed stations should evaluate the distance to a terminal and apply a triangulation method to obtain the absolute position of the terminal).

In another embodiment of the present invention, an entity of cellular radio communication network 15 different from base station 14 may be responsible for determining if direct short-range wireless communication can be established between two terminals. This entity may be a central entity of cellular communication network (15) for example an Serving GPRS Support Node (SGSN) in GPRS/EDGE/UMTS. In the following, the description will be carried on with a base station. It will however be clear for person skilled in the art that another entity of cellular communication network 15 may play the same role.

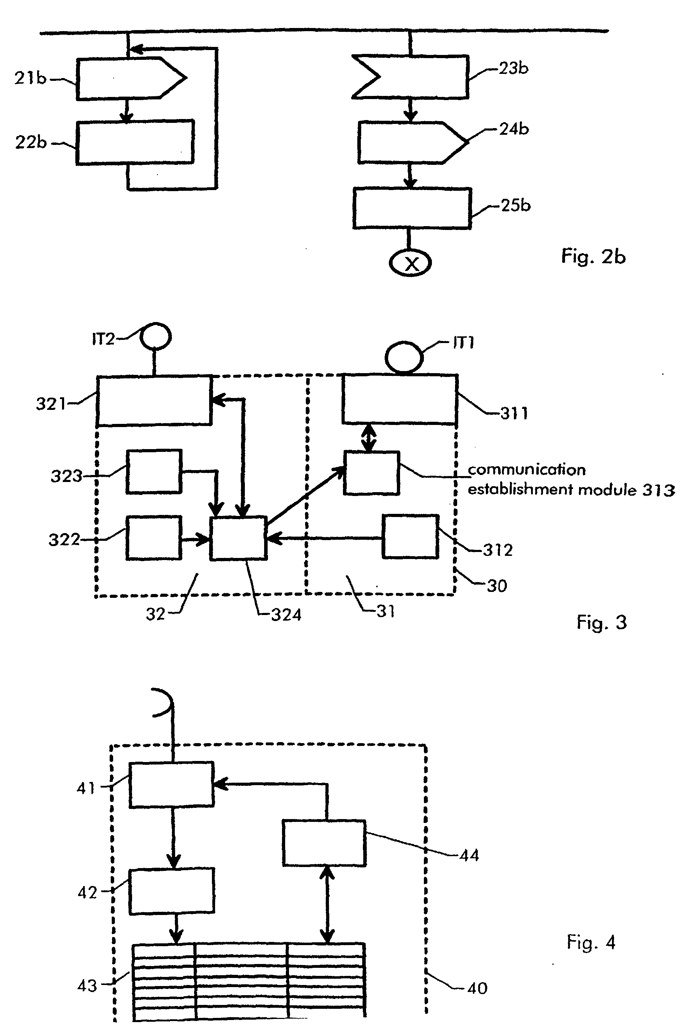

Figure 2 shows an embodiment of the method according to the present invention as implemented at a base station (figure 2a) and as implemented at a terminal (figure 2b).

According to the present invention, following steps are performed at base station 14.

At step 21a, a message is received from a terminal 11, 12, 13. This message comprises an identifier of the terminal identifying univocally the terminal in cellular radio communication network 15. This message further comprises an identifier of the terminal short-range wireless interface IT1. Optionally, the message comprises localization information on the position of the terminal 11, 12, 13.

At step 22a, base station 14 stores the information contained in the received message in a database. Preferably, this database comprises one entry per terminal 11, 12, 13. The database comprises at least a field for an identifier of the terminal in the cellular radio communication network 15, a field for an identifier of the terminal's short-range wireless interface IT1 and a field for the position of the terminal.

The field containing the position of the terminal is either filled in with localization information contained in the message received from the terminal or filled in after the base station has performed a localization procedure of the terminal. This field should preferably be updated at regular time intervals to track changes in the terminal position while moving. For this purpose, if the terminal is responsible for communicating its position to base station 14, it should repeat messages at regular time intervals. If base station 14 is responsible for determining the position of the terminal, it should perform the localization procedure at regular time intervals.

Step 23a to 26a should be repeated at regular time intervals independently of steps 21a and 22a. These steps enables it to determine if a direct short-range wireless connection can be established between two or more of the terminals 11, 12, 13 and triggers the establishment of such a connection if the condition is fulfilled.

Step 23a consists in determining the distance between couples of registered terminals in the database of base station 14. The distance can be directly obtained from the absolute position of both terminals.

Step 24a consists in checking if the distance between couples of terminals is lower or equal to a predefined distance. This predefined distance should be in relation with the type of short-range wireless interface. For this purpose, it is preferable that the database at base station 14 comprises also a field indicating the type of short-range wireless interface available at the registered terminal. The predefined distance being directly linked to the range of the interface type.

If the distance between the two terminals is higher than the predefined distance, the method loops back to step 23a.

Else, step 25a and 26a are executed.

Step 25a consists in sending a message to the first identified potential communication partner. This message is addressed to the appropriated terminal by using its identifier in the cellular radio communication network 15 and comprises the short-range wireless interface identifier of its potential communication counterpart. Further information as if the terminal should be the initiator of the direct short range wireless connection may also be contained in the message.

Step 26a consists in sending a message to the second identified potential communication partner. As at step 25a, this message contains the identifier of the short-range wireless interface of its potential communication counterpart.

Then, step 23a is repeated until all couples of terminals registered in database at base station 14 have been checked as to their distance. Preferably, when all couples have been checked, a timer is started and the procedure is restarted at step 23a upon expiry of this timer.

Figure 2b represents the event handling at terminal 11, 12, 13.

Step 21b consists in the transmission of a message to base station 14 containing an identifier of the terminal in cellular radio communication network 15, an identifier of the short-range wireless interface of the terminal and optionally localization information of the terminal.

Step 22b consists in setting a timer and looping back to step 21b upon timer expiry. Preferably, this step is only performed if localization information should be provided by the terminal itself to base station 14.

Step 23b to 25b should be performed independently of step 21b and step 22b.

Step 23b consists in the reception of a message sent by base station 14 as described at step 25a or 26a.

Step 24b consists in generating a message in the format of the short-range wireless interface destined to a terminal which short-range wireless interface identifier is extracted from the message received at step 23b. This message is transmitted over short-range wireless interface IT1.

Step 25b consists in waiting for an answer from the potential communication counterpart on short-range wireless interface IT1 and establishing a direct communication between the two potential communication partners over their short-range wireless interfaces IT1.

In another embodiment of the present invention a terminal interested in sharing information or looking for a partner to communicate in direct mode over its short-range wireless communication interface may inform base station 14 on this request. Base station 14 is then responsible for determining the position of the requesting terminal as well as the position of potential communication counterparts located at a distance lower than a predefined distance depending on the short-range wireless interface type. Then, as already described above, step 24a and 25a are performed. If several terminals are identified as potential communication partners, a message may be broadcast on a dedicated channel instead of being addressed explicitly to all terminals identified as potential communication partners.

Optionally, base station 14 may impose appropriate billing policies for this service. The cost should preferably be carried by the terminal requesting the service.

The above described method is valid for stationary or slowly moving terminal 11, 12, 13 like in a corporate or SOHO environment. It is also applicable for fast moving terminals too. In this case, the information related to the fast moving terminal (i.e. the identifier of the terminal, the identifier of the short-range wireless interface, the last registered position) should be transferred between the different base stations to the coverage of which the terminal is moves. This transfer of information should preferably be integrated in the handover procedure. An appropriate localization procedure should also be used for tracking fast enough the move of the terminal.

Figure 3 illustrates an embodiment of a terminal according to the present invention.

Terminal 30 comprises a fists part 31 and a second part 32.

First part 31 comprises a transmission /reception module 311 to communicate over a short-range wireless interface IT1 and a module comprising an identifier of said short-range wireless interface module. This identifier is preferably a hardware address as the Ethernet address of the wireless LAN card.

Second part 32 comprises a transmission/reception module 312 to communicate to a cellular radio communication network over a radio interface IT2. Second part 32 further comprises a module 322 comprising an identifier of terminal 30 in the cellular radio communication network, a localization module 323 for determining the position of terminal 30 (localization module 323 is optional) and a module 324 for subscribing to the establishment of a direct communication over said short-range wireless interface IT1 if possible.

Module 324 generates a message destined to be transmitted over radio interface IT2 comprising information from module 312, 322,and 323. Moreover, module 324 triggers module 313 for establishing a connection over short-range wireless interface IT1 upon reception of a message from module 321 comprising an identifier of a potential communication counterpart over short-range wireless interface IT1.

Figure 4 represents an embodiment of a base station according to the present invention.

Base station 40 comprises a transmission reception module 41, a module 42 for handling messages containing an identifier of a short-range wireless interface together with an identifier of a terminal in the cellular radio communication network and if available localization information of the terminal, a database 43 for storing this information for each terminal and a module 44 for determining if a direct short-range communication is possible with a potential communication partner.

## Claims

1. Method for establishing a connection between terminals (11, 12, 13) having a short-range wireless communication interface (IT1) and an interface (IT2) for communicating with a cellular radio communication network (15), said method **characterised in that** it comprises the steps of:
- Registering in an entity (14) of said cellular radio communication network (15) for at least two terminals (11, 12, 13) having a short-range wireless communication interface (IT1) an identifier of said terminals in said cellular radio communication network together with localisation information of said terminals and an identifier of their said short-range wireless communication interfaces (IT1);
- Identifying at said entity (14) by using said localisation information two terminals (11, 12) having a short-range communication interface as potential communication counterparts when each terminal (11, 12) is under the range of its potential communication counterpart's short-range wireless communication interface;
- Transmitting a message to said identified terminals (11, 12) over said cellular radio communication network (15) comprising the identification of the short-range wireless interface of its potential communication counterpart;
- Establishing a direct short-range communication between said two terminals (11, 12).

2. Method according to claim 1, further comprising the step of periodically transmitting from said terminal (11, 12, 13) to said entity (14) a localisation information of said terminal.

3. Method according to claim 1 further comprising the step of
- transmitting from said terminal (11, 12, 13) to said entity (14) an indication that it is interested in the establishment of a short-range wireless communication;
- determining localisation information of said terminal (11, 12, 13) at said entity (14) upon reception of said indication.

4. Terminal (30) comprising a short-range wireless communication interface (IT1) and an interface (IT2) for communicating with a cellular radio communication network (15), said terminal (30) having an univocal identifier in said cellular radio communication network and said short-range wireless interface (IT1) having an univocal identifier, said terminal (30) being **characterised in that** it comprises:
- means (324) for generating a message comprising an identifier (322) of said terminal together with an identifier (312) of said short-range wireless communication interface (IT1),
- means (311) for establishing a short-range communication with a further terminal having a short-range wireless communication interface (IT1) upon reception of a message from said cellular radio communication network (14) comprising an univocal identifier of the short-range wireless communication interface (IT1) of said further terminal.

5. Terminal (30) according to claim 4, wherein said short-range wireless communication interface (IT1) is a high-speed short-range wireless communication interface comprised in the group of IEEE 802.11 interface or Hyperlan 2 interface.

6. Base station (40) of a cellular radio communication network being
**characterised in that** it comprises:
- means (42, 43) for registering in said base station (40) for at least two terminals having an short-range wireless communication interface (IT1) an identifier of said terminals in said cellular radio communication network together with localisation information of said terminals and an identifier of their said short-range wireless communication interfaces;
- means (44) for identifying by using said localisation information two terminals having a short-range communication interface as potential communication counterparts when each terminal is under the range of its potential communication counterpart's short-range wireless communication interface;
- means (41, 44) for transmitting a message to said identified terminals over said cellular radio communication network comprising the identification of the short-range wireless interface of its potential communication counterpart.

7. Base station (40) according to claim 6, wherein said base station belongs to a GSM, GPRS or UMTS radio communication network.

## Patentansprüche

1. Verfahren zur Herstellung einer Verbindung zwischen Endgeräten (11, 12, 13), die eine drahtlose Kommunikationsschnittstelle für kurze Reichweiten (IT1) und eine Schnittstelle (IT2) zur Kommunikation mit einem zellularen Funkkommunikationsnetz (15) enthalten, wobei das Verfahren **dadurch gekennzeichnet ist, dass** es folgende Schritte umfasst:
- Registrierung in einer Einheit (14) des zellularen Funkkommunikationsnetzes (15) für mindestens zwei Endgeräte (11, 12, 13), die eine drahtlose Kommunikationsschnittstelle für kurze Reichweiten (IT1) haben, einer Kennung der Endgeräte in dem zellularen Funkkommunikationsnetz zusammen mit Lokalisierungs-Information der Endgeräte und einer Kennung von deren drahtlosen Kommunikationsschnittstellen für kurze Reichweiten (IT1);
- Unter Verwendung der Lokalisierungs-Information in der Einheit (14) Erkennung von zwei Endgeräten (11, 12) als mögliche Kommunikationspartner, die eine Kommunikationsschnittstelle für kurze Reichweiten haben, wenn jedes Endgerät (11, 12) sich im Bereich der drahtlosen Kommunikationsschnittstelle für kurze Reichweiten seines potentiellen Kommunikationspartners befindet;
- Senden einer Nachricht zu den erkannten Endgeräten (11, 12) über das zellulare Funkkommunikationsnetz (15), welche die Kennung der drahtlosen Schnittstelle für kurze Reichweiten seines potentiellen Kommunikationspartners enthält;
- Aufbau einer direkten Kommunikation über kurze Reichweiten zwischen den beiden Endgeräten (11, 12).

2. Verfahren gemäß Anspruch 1, das weiterhin den Schritt der regelmäßigen Übertragung einer Lokalisierungs-Information des Endgerätes vom Endgerät (11, 12, 13) zu der Einheit (14) umfasst.

3. Verfahren gemäß Anspruch 1, das weiterhin folgende Schritte umfasst:
- Senden einer Anzeige vom Endgerät (11, 12, 13) zur Einheit (14), dass es am Aufbau einer drahtlosen Kommunikation über kurze Reichweiten interessiert ist;
- Ermittlung von Lokalisierungs-Information des Endgerätes (11, 12, 13) an der Einheit (14) bei Empfang der Anzeige.

4. Endgerät (30), das eine drahtlose Kommunikationsschnittstelle für kurze Reichweiten (IT1) und eine Schnittstelle (IT2) zur Kommunikation mit einem zellularen Funkkommunikationsnetz (15) enthält, wobei das Endgerät (30) eine in dem zellularen Funkkommunikationsnetz eindeutige Kennung aufweist und die drahtlose Schnittstelle für kurze Reichweiten (IT1) eine eindeutige Kennung hat, wobei das Endgerät (30) **dadurch gekennzeichnet ist, dass** es folgendes umfasst:
- Mittel (324) zur Erzeugung einer Nachricht, die eine Kennung (322) des Endgerätes zusammen mit einer Kennung (312) der drahtlosen Kommunikationsschnittstelle für kurze Reichweiten (IT1) enthält,
- Mittel (311) zum Aufbau einer Kommunikation über kurze Reichweiten mit einem weiteren Endgerät, das eine drahtlose Kommunikationsschnittstelle für kurze Reichweiten (IT1) hat, wenn eine Nachricht von dem zellularen Funkkommunikationsnetz (14) empfangen wird, die eine eindeutige Kennung einer drahtlosen Kommunikationsschnittstelle für kurze Reichweiten (IT1) des weiteren Endgerätes enthält.

5. Endgerät (30) gemäß Anspruch 4, in dem die drahtlose Kommunikationsschnittstelle für kurze Reichweiten (IT1) eine schnelle drahtlose Kommunikationsschnittstelle für kurze Reichweiten ist, die zur Gruppe der Schnittstellen nach IEEE 802.11 oder Hyperlan 2 gehört.

6. Basisstation (40) eines zellularen Funkkommunikationsnetzes, **dadurch gekennzeichnet, dass** sie folgendes umfasst:
- Mittel (42, 43) zur Registrierung in der Basisstation (40) für mindestens zwei Endgeräte, die eine drahtlose Kommunikationsschnittstelle für kurze Reichweiten (IT1) haben, einer Kennung der Endgeräte in dem zellularen Funkkommunikationsnetz zusammen mit Lokalisierungs-Information der Endgeräte und einer Kennung von deren drahtlosen Kommunikationsschnittstellen für kurze Reichweiten;
- Mittel (44), um unter Verwendung der Lokalisierungs-Information zwei Endgeräte als mögliche Kommunikationspartner zu erkennen, die eine Kommunikationsschnittstelle für kurze Reichweiten haben, wenn jedes Endgerät sich im Bereich der drahtlosen Kommunikationsschnittstelle für kurze Reichweiten seines potentiellen Kommunikationspartners befindet;
- Mittel (41, 44) zum Senden einer Nachricht zu den erkannten Endgeräten über das zellulare Funkkommunikationsnetz, welche die Kennung der drahtlosen Schnittstelle für kurze Reichweiten seines potentiellen Kommunikationspartners enthält.

7. Basisstation (40) gemäß Anspruch 6, wobei die Basisstation zu einem GSM-, GPRS- oder UMTS-Funkkommunikationsnetz gehört.

## Revendications

1. Procédé pour établir une connexion entre des terminaux (11, 12, 13) équipés d'une interface de communication sans fil à courte portée (IT1) et d'une interface (IT2) pour communiquer avec un réseau de radiocommunication cellulaire (15), ledit procédé étant **caractérisé en ce qu'**il comprend les étapes consistant à :
- enregistrer, dans une entité (14) dudit réseau de radiocommunication cellulaire (15), pour au moins deux terminaux (11, 12, 13) équipés d'une interface de communication sans fil à courte portée (IT1), un identificateur desdits terminaux dans ledit réseau de radiocommunication cellulaire ainsi que des informations de localisation desdits terminaux et un identificateur de leurs dites interfaces de communication sans fil à courte portée (IT1);
- identifier, au niveau de ladite entité (14), en utilisant lesdites informations de localisation, deux terminaux (11, 12) équipés d'une interface de communication à courte portée en tant qu'homologues de communication potentiels lorsque chaque terminal (11, 12) est à la portée de l'interface de communication sans fil à courte portée de son homologue de communication potentiel;
- transmettre un message auxdits terminaux (11, 12) identifiés sur ledit réseau de radiocommunication cellulaire (15) comprenant l'identification de l'interface sans fil à courte portée de son homologue de communication potentiel ;
- établir une communication à courte portée directe entre lesdits deux terminaux (11, 12).

2. Procédé selon la revendication 1, comprenant en outre l'étape consistant à transmettre périodiquement, dudit terminal (11, 12, 13) à ladite entité (14), des informations de localisation dudit terminal.

3. Procédé selon la revendication 1, comprenant en outre l'étape consistant à :
- transmettre, dudit terminal (11, 12, 13) à ladite entité (14), une indication du fait qu'il est intéressé par l'établissement d'une communication sans fil à courte portée ;
- déterminer les informations de localisation dudit terminal (11, 12, 13) au niveau de ladite entité (14) lors de la réception de ladite indication.

4. Terminal (30) comprenant une interface de communication sans fil à courte portée (IT1) et une interface (IT2) pour communiquer avec un réseau de radiocommunication cellulaire (15), ledit terminal (30) ayant un identificateur univoque dans ledit réseau de radiocommunication cellulaire et ladite interface sans fil à courte portée (IT1) ayant un identificateur univoque, ledit terminal (30) étant **caractérisé en ce qu'**il comprend :
- des moyens (324) pour générer un message comprenant un identificateur (322) dudit terminal ainsi qu'un identificateur (312) de ladite interface de communication sans fil à courte portée (IT1) ;
- des moyens (311) pour établir une communication à courte portée avec un autre terminal équipé d'une interface de communication sans fil à courte portée (IT1) lors de la réception d'un message provenant dudit réseau de radiocommunication cellulaire (14) comprenant un identificateur univoque de l'interface de communication sans fil à courte portée (IT1) dudit autre terminal.

5. Terminal (30) selon la revendication 4, dans lequel ladite interface de communication sans fil à courte portée (IT1) est une interface de communication sans fil à courte portée à haut débit comprise dans le groupe d'interface IEEE 802.11 ou d'interface Hyperlan 2.

6. Station de base (40) d'un réseau de radiocommunication cellulaire, **caractérisée en ce qu'**elle comprend :
- des moyens (42, 43) pour enregistrer, dans ladite station de base (40), pour au moins deux terminaux équipés d'une interface de communication sans fil à courte portée (IT1), un identificateur desdits terminaux dans ledit réseau de radiocommunication cellulaire ainsi que des informations de localisation desdits terminaux et un identificateur de leurs interfaces de communication sans fil à courte portée ;
- des moyens (44) pour identifier, en utilisant lesdites informations de localisation, deux terminaux équipés d'une interface de communication à courte portée en tant qu'homologues de communication potentiels lorsque chaque terminal est à la portée de l'interface de communication sans fil à courte portée de son homologue de communication potentiel ;
- des moyens (41, 44) pour transmettre un message auxdits terminaux identifiés sur ledit réseau de radiocommunication cellulaire comprenant l'identification de l'interface sans fil à courte portée de son homologue de communication potentiel.

7. Station de base (40) selon la revendication 6, dans laquelle ladite station de base appartient à un réseau de radiocommunication GSM, GPRS ou UMTS.
